# EUROPÄISCHE PATENTANMELDUNG

(11) **EP 4 349 537 A1**
(43) Veröffentlichungstag der Anmeldung: **10.04.2024**
(21) Anmeldenummer: 23199217.3
(22) Anmeldetag: 22.09.2023
(51) Int. Cl.: B25J 9/04, B25J 15/04, B25J 15/06, B25J 17/02, B25J 19/00

(54) **HANDHABUNGSVORRICHTUNG**

(30) Priorität: 04.10.2022 DE 102022125563
(71) Anmelder: J. Schmalz GmbH, 72293 Glatten (DE)
(72) Erfinder: Frey, Matthias, 72172 Sulz-Dürrenmettstetten (DE); Sipple, Jeremia, 72293 Glatten (DE)
(74) Vertreter: DREISS Patentanwälte PartG mbB

(57) **Zusammenfassung**

Die Erfindung betrifft eine Handhabungsvorrichtung (10), umfassend einen Manipulator (12) und eine Kopplungseinrichtung (16) mit einem Kopplungsabschnitt (48) zur Ankopplung eines Endeffektors (14) an den Manipulator, wobei der Manipulator einen Spindelantrieb (20) zum Antreiben einer translatorischen und/oder rotatorischen Bewegung der Kopplungseinrichtung bezüglich einer Z-Achse (24) umfasst, wobei der Spindelantrieb eine Spindel (22) umfasst, welche entlang der Z-Achse erstreckt ist, wobei der Kopplungsabschnitt bezüglich wenigstens eines Freiheitsgrads relativ zu der Spindel verstellbar ist, wobei eine Antriebseinrichtung (50) zum Antreiben einer Stellbewegung des Kopplungsabschnitts bezüglich des wenigstens eines Freiheitsgrads vorgesehen ist, wobei die Antriebseinrichtung eine Antriebseinheit (52) und eine Kraftübertragungseinrichtung (54) zur Übertragung einer Antriebsbewegung der Antriebseinheit auf den Kopplungsabschnitt umfasst, wobei die Kopplungseinrichtung an einem ersten Ende (26) der Spindel angeordnet ist und wobei die Antriebseinheit an dem zweiten Ende (56) der Spindel angeordnet ist.

## Beschreibung

Die Erfindung betrifft eine Handhabungsvorrichtung umfassend einen Manipulator, insbesondere Scara-Roboter, und eine Kopplungseinrichtung zum Ankoppeln eines Endeffektors an den Manipulator.

Solche Handhabungsvorrichtungen finden beispielsweise beim Kommissionieren von Waren in Warenlagern Verwendung und dienen dort insbesondere dazu, Warengegenstände aus einem Lagerbehälter mit einer Mehrzahl von Warengegenständen zu greifen (sog. "bin-picking" oder "Griff in die Kiste") und an einen anderen Ort, bspw. einem Transportbehälter, zu verbringen.

In diesem Zusammenhang ist es bekannt, Roboter mit einer Scara-Kinematik einzusetzen, wobei eine translatorische und/oder rotatorische Bewegung entlang einer Z-Achse durch einen Spindelantrieb bereitgestellt ist, an dessen Spindel der Endeffektor angeordnet ist. Eine solcher Roboter mit Spindelantrieb ermöglicht besonders schnelle und wiederholgenaue Bewegungen und somit eine hohe "Greifrate".

In einer typischen Anwendungssituation enthält ein vorstehend erwähnter Lagerbehälter eine Vielzahl von Warengegenständen, die beispielsweise auch unterschiedliche Formen, Größen und Gewichte aufweisen können. Insbesondere ist auch denkbar, dass die Gegenstände ungeordnet, d.h. mit unterschiedlichen Orientierungen, im Lagerbehälter liegen und die zum Greifen geeigneten Bereiche der Außenflächen verschiedener Gegenstände unterschiedlich orientiert sind.

Zum sicheren Greifen eines Gegenstands ist es daher regelmäßig erforderlich, den Endeffektor in Abhängigkeit einer Außenform und/oder Orientierung eines zu greifenden Gegenstands auszurichten.

Die Erfindung beschäftigt sich mit der Aufgabe, Gegenstände mit unterschiedlicher Orientierung und/oder Außenform flexibel und schnell greifen zu können. Zudem ist eine geringe Störkontur beim Greifen wünschenswert.

Diese Aufgabe wird durch eine Handhabungsvorrichtung gemäß dem Anspruch 1 gelöst.

Die Handhabungsvorrichtung ist zum Handhaben von Gegenständen ausgebildet, insbesondere zum Anheben, Verlagern, Absenken und Absetzen von Gegenständen. Die Handhabungsvorrichtung umfasst einen Manipulator, insbesondere Roboter, und eine Kopplungseinrichtung mit einem Kopplungsabschnitt zur Ankopplung eines Endeffektors an den Manipulator. Der Manipulator ist insbesondere dazu ausgebildet, die Kopplungseinrichtung und einen optional daran angeordneten Endeffektor zu verlagern. Bei dem Endeffektor kann es sich insbesondere um eine Greifvorrichtung, vorzugsweise eine Sauggreifvorrichtung, handeln.

Der Manipulator umfasst einen Spindelantrieb zum Antreiben einer translatorischen und/oder rotatorischen Bewegung der Kopplungseinrichtung und eines optional daran angekoppelten Endeffektors bezüglich einer, insbesondere vertikalen, Z-Achse. Der Spindelantrieb ist insofern insbesondere zum Antreiben einer translatorischen Stellbewegung der Kopplungseinrichtung entlang der Z-Achse ausgebildet und/oder zum Antreiben einer Drehbewegung um die Z-Achse. Mit anderen Worten ist der Spindelantrieb zur Verlagerung der Kopplungseinrichtung und eines optional daran angeordneten Endeffektors entlang der Z-Achse und/oder um die Z-Achse ausgebildet.

Der Spindelantrieb umfasst eine Spindel, welche mit einer Hauptlängsachse entlang der Z-Achse erstreckt ist. Die Spindel ist insbesondere um die Z-Achse drehbar gelagert, vorzugsweise derart, dass sie, insbesondere voneinander unabhängig, sowohl eine Drehbewegung um die Z-Achse als auch eine translatorische Bewegung entlang der Z-Achse ausführen kann. Vorzugsweise ist die Spindel als Kugelrollspindel ausgebildet.

Der Kopplungsabschnitt der Kopplungseinrichtung ist bezüglich wenigstens eines Freiheitsgrads relativ zu der Spindel verstellbar, insbesondere unabhängig von einer Bewegung der Spindel. Insbesondere kann der Kopplungsabschnitt relativ zu der Spindel verschwenkbar sein.

Die Handhabungsvorrichtung umfasst außerdem eine Antriebseinrichtung zum Antreiben einer Stellbewegung des Kopplungsabschnitts bezüglich des wenigstens einen Freiheitsgrades. Die Antriebseinrichtung ist insofern dazu ausgebildet, den Kopplungsabschnitt bezüglich des wenigstens einen Freiheitsgrades relativ zu der Spindel zu bewegen Insbesondere kann die Antriebseinrichtung dazu ausgebildet sein, den Kopplungsabschnitt relativ zu der Spindel zu verschwenken.

Die Antriebseinrichtung umfasst eine Antriebseinheit (Aktor) und eine Kraftübertragungseinrichtung zur Übertragung einer Antriebsbewegung der Antriebseinheit auf den Kopplungsabschnitt.

Die Kopplungseinrichtung ist an einem ersten Ende der Spindel angeordnet, insbesondere daran befestigt. Die Antriebseinheit der Antriebseinrichtung ist an dem zweiten, gegenüberliegenden Ende der Spindel angeordnet, insbesondere daran befestigt.

Eine solche Handhabungsvorrichtung ermöglicht es, den Kopplungsabschnitt und somit einen optional daran angeordneten Endeffektor auf einfache und zuverlässige Weise relativ zu der Spindel zu verstellen und somit eine Orientierung des Endeffektors bspw. bedarfsgerecht an eine Position und Lage eines zu greifenden Gegenstandes anzupassen. Auf diese Weise können auch Gegenstände in unterschiedlichen Positionen und Lagen zuverlässig gegriffen werden, was insbesondere beim "bin-picking" von Vorteil ist, wobei Warengegenstände regelmäßig ungeordnet, d.h. mit unterschiedlichen Orientierungen, im Lagerbehälter liegen.

Dadurch, dass die Antriebseinheit am oberen Ende der Spindel befestigt ist, ist eine Störkontur im Bereich des Endeffektors reduziert. Dies erleichtert das Greifen von Gegenständen aus einem Lagerbehälter und ermöglicht es insbesondere auch Gegenständen aus vergleichsweise schmalen Lagerbehältern oder Eckbereichen eines Lagerbehälters zu greifen. Darüber hinaus ist bei der vorgeschlagenen Handhabungsvorrichtung das Risiko minimiert, dass Gegenstände an Vorsprüngen oder Vertiefungen der Antriebseinheit hängenbleiben und die Antriebseinheit dabei möglicherweise beschädigen oder in ihrer Funktion beeinträchtigen. Die Handhabungsvorrichtung ist insofern besonders robust ausgebildet, sodass auch nach vielen Greifzyklen in einen Lagerbehälter eine zuverlässige Funktion gewährleistet ist.

Bei dem wenigstens einen Freiheitsgrad kann es sich um einen linearen (translatorischen) und/oder rotatorischen Freiheitsgrad handeln. Insofern ist es denkbar, dass der Kopplungsabschnitt relativ zu der Spindel translatorisch verlagerbar und/oder verdrehbar ist. Vorzugsweise handelt es sich bei dem Freiheitsgrad um einen Schwenkfreiheitsgrad.

Die Kraftübertragungseinrichtung kann wenigstens ein Kraftübertragungselement umfassen, welches entlang der Z-Achse verlagerbar und/oder um die Z-Achse verdrehbar ist. Bei dem wenigstens einen Kraftübertragungselement kann es sich beispielsweise um eine Schubstange, einen Bowdenzug, eine Zahnstange, oder eine Spindel handeln. Die Antriebseinheit kann insbesondere dazu ausgebildet sein, eine translatorische Bewegung des wenigstens einen Kraftübertragungselements entlang der Z-Achse und/oder eine rotatorische Bewegung des wenigstens einen Kraftübertragungselements um die Z-Achse anzutreiben.

Die Kopplungseinrichtung kann einen mit der Spindel, insbesondere drehfest, verbundenen Verbindungsabschnitt und einen daran beweglich, insbesondere drehbar oder schwenkbar, angeordneten Verstellabschnitt aufweisen, wobei der Kopplungsabschnitt an dem Verstellabschnitt angeordnet ist. Dann kann die Antriebseinrichtung dazu eingerichtet sein, den Verstellabschnitt relativ zu dem Verbindungsabschnitt zu bewegen.

Die Kopplungseinrichtung kann insbesondere dazu ausgebildet sein, einen Endeffektor wiederholbar lösbar mit dem Manipulator zu verbinden. Vorzugsweise kann der Kopplungsabschnitt als Schnellwechsel-Kupplung ausgebildet sein. Beispielsweise ist es denkbar, dass die Kopplungseinrichtung eine Magnetverbindung umfasst, welche zwischen Endeffektor und Kopplungsabschnitt wirksam ist. Insofern sind lediglich einfache Bewegungsmuster zum An- bzw. Entkoppeln des Endeffektors an den Schwenkabschnitt erforderlich, was einen automatisierten Endeffektor-Wechsel begünstigt.

Der Manipulator kann insbesondere als Scara-Roboter ausgebildet sein. Insofern kann der Manipulator eine Roboterbasis und einen Roboterarm aufweisen, welcher drei nacheinander angeordnete Glieder aufweist. Insbesondere kann vorgesehen sein, dass ein erstes Glied mit der Roboterbasis um eine erste Achse schwenkbar, insbesondere drehbar, verbunden ist, ein zweites Glied um eine zweite Achse schwenkbar, insbesondere drehbar, mit dem ersten Glied verbunden ist, und ein drittes Glied durch die Spindel bereitgestellt ist. Die Spindel ist dann insbesondere um eine dritte Achse (die Z-Achse) drehbar mit dem zweiten Glied verbunden. Vorzugsweise verlaufen die erste Achse, die zweite Achse und die dritte Achse (Z-Achse) zueinander parallel, vorzugweise vertikal. Das zweite Glied kann insbesondere einen Antriebsmotor und/oder optional Getriebeeinrichtungen des Spindelantriebs zum Antreiben einer Drehbewegung der Spindel um die z-Achse umfassen. Die Spindel ist vorzugsweise als Kugelrollspindel ausgebildet.

Im Rahmen einer vorteilhaften Weiterbildung kann die Spindel als Hohlspindel ausgebildet sein. Insofern kann die Hohlspindel einen inneren, vorzugsweise zentralen, Hohlraum umfassen. Vorzugsweise erstreckt sich der Hohlraum entlang der Z-Achse von dem ersten Ende der Spindel zu dem zweiten Ende der Spindel, insbesondere durchgehend. In diesem Zusammenhang kann es vorteilhaft sein, wenn die Kraftübertragungseinrichtung zumindest abschnittsweise durch den Hohlraum der Hohlspindel geführt ist. Bei einer solchen Ausgestaltung ist eine Störkontur beim Greifen weiter reduziert. Zudem ist die Kraftübertragungseinrichtung vor Umgebungseinflüssen geschützt, was insbesondere bei einem "Griff in die Kiste" mit einer Mehrzahl von Gegenständen das Risiko von Beschädigungen reduziert. Eine solche Ausgestaltung ermöglicht insofern einen besonders zuverlässigen und störungsfreien Betrieb der Handhabungsvorrichtung.

Die Kraftübertragungseinrichtung kann wenigstens ein Kraftübertragungselement umfassen, welches zumindest abschnittsweise in dem Hohlraum der Hohlspindel angeordnet ist. Das wenigstens eine Kraftübertragungselement kann sich insbesondere von dem ersten Ende der Spindel zu dem zweiten Ende der Spindel entlang der Z-Achse erstrecken. Zur Übertragung einer Antriebsbewegung der Antriebseinheit auf den Kopplungsabschnitt kann das wenigstens eine Kraftübertragungselement in dem Hohlraum entlang der Z-Achse verlagerbar, insbesondere hin und her bewegbar, und/oder um die Z-Achse verdrehbar sein.

Es ist denkbar, dass das Kraftübertragungselement eine Schubstange ist. Die Schubstange kann insbesondere dazu ausgebildet sein, eine translatorische Bewegung entlang der Z-Achse und/oder eine Drehbewegung um die Z-Achse auf den Kopplungsabschnitt der Kopplungseinrichtung zu übertragen. Es ist auch denkbar, dass das Kraftübertragungselement ein Bowdenzug ist. Alternativ ist es auch denkbar, dass das Kraftübertragungselement als Zahnstange ausgebildet ist. Im Rahmen einer weiteren Ausgestaltung ist es auch denkbar, dass das Kraftübertragungselement eine Spindel ist. Die Spindel des der Antriebseinrichtung kann dann insbesondere relativ zu der Spindel des Manipulators um die Z-Achse verdrehbar sein.

Im Rahmen einer vorteilhaften Ausgestaltung kann es sich bei dem wenigstens einen Freiheitsgrad um einen Schwenkfreiheitsgrad handeln. Insbesondere kann der Kopplungsabschnitt relativ zu der Spindel um eine, vorzugsweise zu der Z-Achse orthogonal verlaufende, Schwenkachse schwenkbar sein. Dann kann die Antriebseinrichtung dazu eingerichtet sein, eine Schwenkbewegung des Kopplungsabschnitts um die Schwenkachse anzutreiben. Durch Verschwenken des Kopplungsabschnitts ist es insbesondere möglich, eine Orientierung des Endeffektors zu verändern und somit Gegenstände in unterschiedlichen Positionen und Lagen auf einfache Weise zu greifen.

Im Konkreten kann die Kopplungseinrichtung einen Verbindungsabschnitt zur Anbindung der Kopplungseinrichtung an die Spindel und einen Schwenkabschnitt umfassen, wobei der Kopplungsabschnitt an dem Schwenkabschnitt angeordnet ist. Der Schwenkabschnitt ist dann vorzugsweise an dem Verbindungsabschnitt um die Schwenkachse schwenkbar gehaltert. In diesem Zusammenhang kann es vorteilhaft sein, wenn der Schwenkabschnitt stufenlos um die Schwenkachse verschwenkbar ist. Insbesondere liegt ein maximaler Schwenkwinkel des Schwenkabschnitts zwischen 0° und einschließlich 90°, insbesondere bei 30°, weiter insbesondere bei 45°. Der Verbindungsabschnitt kann insbesondere drehfest mit der Spindel verbunden sein.

Bei einer Ausgestaltung mit Schwenkabschnitt ist die Antriebseinrichtung dann insbesondere dazu eingerichtet, eine Schwenkbewegung des Schwenkabschnitts um die Schwenkachse anzutreiben. Insbesondere kann die Kraftübertragungseinrichtung wenigstens ein Kraftübertragungselement umfassen, welches derart mit dem Schwenkabschnitt mechanisch gekoppelt ist, dass eine translatorische Verschiebebewegung des wenigstens einen Kraftübertragungselements entlang der Z-Achse zu einer Schwenkbewegung des Schwenkabschnitts um die Schwenkachse führt. In diesem Zusammenhang ist es beispielsweise denkbar, dass das wenigstens eine Kraftübertragungselement, beispielsweise eine Schubstange, über ein weiteres Schwenkgelenk mit dem Schwenkabschnitt verbunden ist. Bei einer solchen Ausgestaltung kann es vorteilhaft sein, wenn die Schwenkachse zwischen Kraftübertragungselement und Schwenkabschnitt und die Schwenkachse zwischen Verbindungsabschnitt und Schwenkabschnitt zueinander parallel verlaufen.

Zum Antreiben einer Verschiebebewegung des wenigstens einen Kraftübertragungselements entlang der Z-Achse, kann es vorteilhaft sein, wenn die Antriebseinheit als Linearantrieb zum Antreiben einer translatorischen Bewegung entlang der Z-Achse ausgebildet ist. Beispielsweise kann die Antriebseinheit einen Pneumatikzylinder umfassen. Vorzugsweise ist eine Bewegungsachse des Pneumatikzylinders zu der Z-Achse parallel oder mit dieser identisch. Es ist auch denkbar, dass die Antriebseinrichtung einen elektrischen Zylinder und/oder einen elektrischen Antrieb mit Hebel umfasst.

Darüber hinaus kann die Antriebseinheit optional dazu ausgebildet sein, eine Drehbewegung des wenigstens einen Kraftübertragungselements um die Z-Achse anzutreiben. Beispielsweise ist es denkbar, dass der Kopplungsabschnitt oder die gesamte Kopplungseinrichtung um die Z-Achse relativ zu der Spindel verdrehbar sind.

Im Rahmen eines allgemeinen Aspekts kann es auch vorteilhaft sein, wenn die Kopplungseinrichtung mit der Spindel, insbesondere über den Verbindungsabschnitt, drehfest um die Z-Achse gekoppelt ist, sodass eine rotatorische Bewegung der Spindel um die Z-Achse auf die Kopplungseinrichtung und einen optional daran an gekoppelten Endeffektor übertragen wird. Eine solche Ausgestaltung ist besonders einfach und robust aufgebaut, da keine Drehbewegung um die Z-Achse von der Antriebseinrichtung bereitgestellt werden muss. In diesem Zusammenhang ist es denkbar, dass das wenigstens eine Kraftübertragungselement mit der Spindel um die Z-Achse drehfest gekoppelt ist. Dies kann beispielsweise dadurch erfolgen, dass das wenigstens eine Kraftübertragungselement drehfest mit der Kopplungseinrichtung verbunden ist und die Kopplungseinrichtung wiederum drehfest mit der Spindel verbunden ist.

Ferner erweist es sich als vorteilhaft, wenn die Antriebseinheit von einer Drehbewegung der Spindel und/oder des wenigstens einen Kraftübertragungselements um die Z-Achse entkoppelt ist. Beispielsweise ist es denkbar, dass die Antriebseinheit über eine Drehlagerung mit der Spindel verbunden ist. Bei einer Drehbewegung der Spindel um die Z-Achse wird die Antriebseinrichtung somit nicht mit verdreht, sondern verbleibt ortsfest. Dies hat den Vorteil, dass Versorgungsanschlüsse der Antriebseinheit, beispielsweise zum Anschluss von Stromkabeln oder Fluidleitungen, stets in die gleiche Richtung weisen, was eine einfache Kabel- oder Schlauchführung ermöglicht. In diesem Zusammenhang kann es außerdem vorteilhaft sein, wenn die Antriebseinheit durch eine Führungsstange gegen ein Verdrehen um die Z-Achse gesichert ist.

Bei Ausgestaltungen, bei denen das wenigstens eine Kraftübertragungselement mit der Spindel drehfest um die Z-Achse gekoppelt ist, kann es außerdem vorteilhaft sein, wenn die Antriebseinheit, insbesondere ein mit dem wenigstens einen Kraftübertragungselements verbundener Aktor, beispielsweise Zylinder, von einer Drehbewegung des wenigstens einen Kraftübertragungselements um die Z-Achse entkoppelt ist. Beispielsweise ist es denkbar, dass der Aktor über eine entsprechende Drehlagerung mit dem wenigstens einen Kraftübertragungselement verbunden ist.

Im Rahmen eines allgemeinen Aspekts kann es vorteilhaft sein, wenn an der Kopplungseinrichtung eine Fluidversorgung, insbesondere Unterdruckversorgung und/oder Überdruckversorgung, vorhanden ist, beispielsweise um einen Endeffektor zu betreiben. Insbesondere kann es vorteilhaft sein, wenn der Kopplungsabschnitt einen Unterdruckauslass und/oder einen Überdruckauslass aufweist. Der Überdruckauslass und/oder der Unterdruckauslass können insbesondere in Form einer jeweiligen Fluid-Schnittstelle zur Verbindung mit einer entsprechenden Gegen-Fluid-Schnittstelle eines Endeffektors ausgebildet sein. Insofern kann der Kopplungsabschnitt dazu ausgebildet sein, eine Fluidverbindung zwischen Kopplungseinrichtung und Endeffektor herzustellen. Besonders vorteilhaft kann es sein, wenn die Kopplungseinrichtung derart ausgebildet ist, dass beim Befestigen des Endeffektors an dem Kopplungsabschnitt wenigstens eine Fluidverbindung zwischen Kopplungsabschnitt und Endeffektor ausgebildet wird, was einen einfachen Endeffektor-Wechsel ermöglicht.

In diesem Zusammenhang ist es auch denkbar, dass der Kopplungsabschnitt dazu ausgebildet ist, sowohl eine Unterdruck-Fluidverbindung als auch eine Überdruck-Fluidverbindung zwischen Endeffektor und Kopplungsabschnitt herzustellen. Beispielsweise ist es möglich, dass der Kopplungsabschnitt ein Unterdruckauslass und einen Überdruckauslass aufweist und der Endeffektor an einer entsprechenden Gegenkoppelseite einen Unterdruckeinlass und oder einen Überdruckeinlass aufweist. Besonders vorteilhaft kann es sein, wenn der Unterdruckauslass und der Unterdruckeinlass bzw. der Überdruckauslass und der Überdruckeinlass derart ausgebildet und angeordnet sind, dass der Unterdruckauslass und der Unterdruckeinlass bzw. der Überdruckauslass und der Überdruckeinlass beim Befestigen des Endeffektors an dem Kopplungsabschnitt eine Fluidverbindung ausbilden.

Zur Versorgung des Endeffektors mit Fluid kann es bei Ausgestaltungen mit Hohlspindel ferner vorteilhaft sein, wenn wenigstens eine Fluiddurchführung zur Durchführung von Fluid, insbesondere Unterdruck oder Überdruck, durch die Hohlspindel vorgesehen ist. Beispielsweise ist es denkbar, dass in dem Hohlraum der Hohlspindel ein Fluidschlauch geführt ist. Es ist aber auch denkbar, dass zumindest ein Teilvolumen des Hohlraums der Hohlspindel selbst die wenigstens eine Fluiddurchführung bereitstellt. Die Fluiddurchführung bildet insofern keine Störkontur beim Handhaben von Gegenständen, wie dies beispielsweise bei externen Schlauchverbindungen der Falls ein kann.

Um eine Fluidversorgung des Endeffektors auch während einer Schwenkbewegung des Schwenkabschnitts um die Schwenkachse zu gewährleisten, kann es bei Ausgestaltungen der Kupplungseinrichtung mit Schwenkabschnitt vorteilhaft sein, wenn eine Fluidverbindung zwischen Fluiddurchführung und Unterdruck- bzw. Überdruckauslass an dem Kopplungsabschnitt durch das Schwenkgelenk verläuft.

Unabhängig von der konkreten Ausgestaltung der Handhabungsvorrichtung kann die Handhabungsvorrichtung eine Steuereinrichtung zur Ansteuerung des Manipulators und der Antriebseinrichtung umfassen.

Die Handhabungsvorrichtung kann ferner eine Erkennungseinrichtung umfassen, welche dazu ausgebildet ist, Position und Lage eines zu greifenden Gegenstands, insbesondere Position und Lage einer Außenfläche des Gegenstands, zu erkennen. Dies ermöglicht es, vor dem Anfahren des Endeffektors an einen Gegenstand, den Gegenstand zu charakterisieren, insbesondere eine Greifposition auf dem Gegenstand zu erkennen. Beispielsweise ist es denkbar, dass die Erkennungseinrichtung eine oder mehrere Kameras umfasst.

Dann kann die Steuereinrichtung insbesondere dazu eingerichtet sein, um in Abhängigkeit einer von der Erkennungseinrichtung erfassten Orientierung, insbesondere Position und Lage, eines Gegenstands, den Manipulator und/oder die Antriebseinrichtung anzusteuern.

Wie vorstehend erwähnt, kann es sich bei dem Endeffektor insbesondere um eine Greifvorrichtung handeln. Bei Anwendungen im Bereich "Bin-Picking" hat es sich als vorteilhaft herausgestellt, wenn der Endeffektor als Sauggreifvorrichtung ausgebildet ist. Insofern kann die Handhabungsvorrichtung eine Sauggreifvorrichtung umfassen, welche über den Kopplungsabschnitt mit dem Manipulator verbunden ist.

Die Erfindung wird im Folgenden anhand der Figuren näher erläutert.

Es zeigen:
- Figur 1: eine vereinfachte schematische Darstellung einer Ausgestaltung der Handhabungsvorrichtung in einer Seitenansicht; und
- Figur 2: einen vergrößerten Ausschnitt der Handhabungsvorrichtung gemäß Figur 1 im Bereich der Spindel in einer Schnittansicht.

In der nachfolgenden Beschreibung sowie in den Figuren sind für identische oder einander entsprechende Merkmale jeweils dieselben Bezugszeichen verwendet.

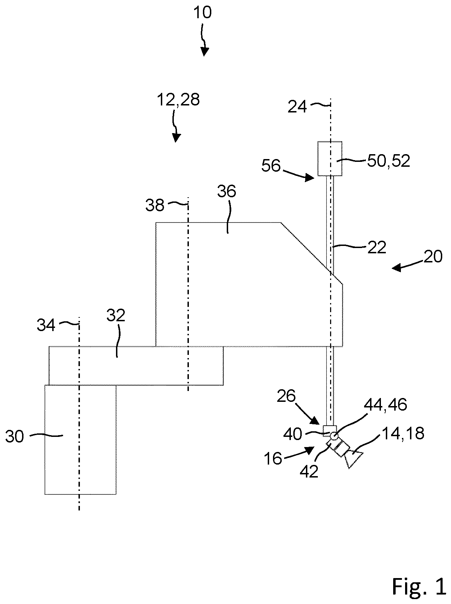

Die Figur 1 zeigt in vereinfachter schematischer Darstellung eine Ausgestaltung einer Handhabungsvorrichtung zum Greifen und Handhaben von Gegenständen (nicht dargestellt), welche insgesamt mit dem Bezugszeichen 10 bezeichnet ist. Die Handhabungsvorrichtung 10 umfasst einen Manipulator (z.B. Roboter) 12 und einen Endeffektor 14, welcher über eine Kopplungseinrichtung 16 mit dem Manipulator 12 verbunden ist.

In dem dargestellten Beispiel ist der Endeffektor 14 als Sauggreifvorrichtung 18 zum Ansaugen eines Gegenstands ausgebildet. Bei nicht dargestellten Ausgestaltungen ist es aber auch denkbar, dass der Endeffektor 14 als mechanischer Greifer, beispielsweise als pneumatisch betätigter mechanischer Greifer, ausgebildet ist.

Wie in Figur 1 schematisch dargestellt, umfasst der Manipulator 12 einen Spindelantrieb 20 mit einer Spindel 22, welche entlang einer Z-Achse 24 erstreckt ist. Wie aus Figur 1 ersichtlich, ist die Kopplungseinrichtung 16 an einem ersten Ende 26 der Spindel 22 angeordnet und von dieser translatorisch und/oder rotatorisch bezüglich der Z-Achse 24 verlagerbar.

Vorzugsweise ist die Spindel 22 als Kugelrollspindel ausgebildet, welche sowohl eine translatorische Bewegung entlang der Z-Achse 24 als auch eine rein rotatorische Bewegung um die Z-Achse 24 ermöglicht.

In dem dargestellten Beispiel ist der Manipulator 12 als 4-Achs Scara-Roboter 28 ausgebildet, wobei eine dritte und vierte Achse des Scara-Roboters 28 (translatorische und rotatorische Bewegung bezüglich der Z-Achse 24) durch den Spindelantrieb 20 bereitgestellt sind. Im konkreten Beispiel umfasst der Scara-Roboter 28 eine Roboterbasis 30, an welchem ein erstes Roboterglied 32 um eine erste, insbesondere vertikale, Achse 34 schwenkbar, insbesondere drehbar, befestigt ist. An dem ersten Roboterglied 32 ist ein zweites Roboterglied 36 um eine zweite Achse 38 schwenkbar, insbesondere drehbar, befestigt. An dem zweiten Roboterglied 36 ist dann die vorstehend beschriebene Spindel 22 befestigt. Insbesondere umfasst das zweite Roboterglied 36 auch entsprechende Antriebs- und/oder Getriebeeinheiten des Spindelantriebs 20. Beispielhaft und bevorzugt sind die erste Achse 34, die zweite Achse 38 und die Z-Achse 24 (dritte Achse) zueinander parallel angeordnet.

Die Kopplungseinrichtung 16 umfasst in dem dargestellten Beispiel einen Verbindungsabschnitt 40 welcher mit der Spindel 22, vorzugsweise drehfest, verbunden ist. Die Kopplungseinrichtung 16 umfasst außerdem einen Schwenkabschnitt 42, welcher über ein Schwenkgelenk 44 mit dem Verbindungsabschnitt 40 verbunden ist und somit um eine Schwenkachse 46 relativ zu der Spindel 22 verschwenkbar ist. Die Schwenkachse 46 ist beispielhaft und bevorzugt zu der Z-Achse 24 orthogonal orientiert (vgl. Fig. 1).

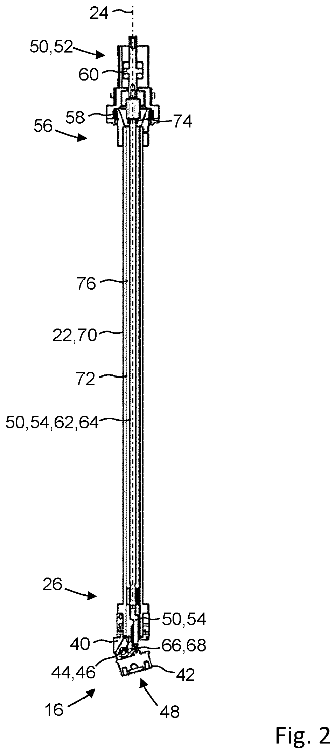

Der Schwenkabschnitt 42 umfasst einen Kopplungsabschnitt 48 an welchen der Endeffektor 14, insbesondere wiederholbar lösbar, ankoppelbar ist (vgl. Fig. 2). Im angekoppelten Zustand ist dann eine Orientierung des Endeffektors 14 über eine Schwenkbewegung des Schwenkabschnitts 42 um die Schwenkachse 46 veränderbar.

Wie vorstehend erwähnt, kann der Kopplungsabschnitt 48 als Schnellwechsel-Kupplung ausgebildet sein. Beispielsweise ist es denkbar, dass der Endeffektor 14 über eine Magnetverbindung mit dem Kopplungsabschnitt 48 verbindbar ist.

Die Handhabungsvorrichtung 10 umfasst außerdem eine Antriebseinrichtung 50 zur Betätigung einer Schwenkbewegung des Schwenkabschnitts 42 und somit des Kopplungsabschnitts 48 um die Schwenkachse 46. Die Antriebseinrichtung 50 umfasst eine Antriebseinheit 52 und eine Kraftübertragungseinrichtung 54 zur Übertragung einer Antriebsbewegung der Antriebseinheit 52 auf den Schwenkabschnitt 42 (vgl. Fig. 2).

Die Antriebseinheit 52 ist an dem der Kopplungseinrichtung 16 gegenüberliegenden zweiten Ende 56 der Spindel 24 angeordnet (vgl. Fig. 1). Antriebseinheit 52 und Kopplungseinrichtung 16 sind insofern voneinander räumlich getrennt. Vorzugsweise ist die Antriebseinheit 52 über eine Drehlagerung 58 an der Spindel 22 gehaltert und somit von einer Drehbewegung der Spindel 22 um die Z-Achse 24 entkoppelt (vgl. Fig. 2).

Wie in Figur 2 dargestellt, umfasst die Antriebseinheit 52 in dem dargestellten Beispiel einen Pneumatikzylinder 60, welcher dazu ausgebildet ist, eine translatorische Bewegung entlang der Z-Achse 24 auszuführen. Bei nicht dargestellten Ausgestaltungen ist es auch denkbar, dass die Antriebseinheit 52 bspw. einen elektromotorisch betriebenen Zylinder aufweist.

Um eine Antriebsbewegung der Antriebseinheit 52 bzw. des Pneumatikzylinders 60 auf den Schwenkabschnitt 42 zu übertragen, umfasst die Kraftübertragungseinrichtung 54 wenigstens ein Kraftübertragungselement 62, welches im dargestellten Beispiel als Schubstange 64 ausgebildet ist (vgl. Fig. 2). Bei nicht dargestellten Ausgestaltungen ist es auch denkbar, dass das Kraftübertragungselement 62 als Bowdenzug, Zahnstange oder Spindel ausgebildet ist.

Wie aus Figur 2 ersichtlich, ist die Schubstange 64 einerseits mit dem Pneumatikzylinder 60 verbunden und andererseits mit dem Schwenkabschnitt 42. Eine Kopplung zwischen Schubstange 64 und Schwenkabschnitt 42 ist dabei derart vorgesehen, dass eine Verschiebebewegung der Schubstange 64 entlang der Z-Achse 24 zu einer Schwenkbewegung des Schwenkabschnitts 42 um die Schwenkachse 46 führt.

Zu diesem Zweck ist die Schubstange 64 im Beispiel über ein Schwenkgelenk 66 mit dem Schwenkabschnitt 42 um eine Schwenkachse 68 schwenkbar verbunden (vgl. Fig. 2). Beispielhaft und bevorzugst verlaufen die Schwenkachse 46 zwischen Verbindungsabschnitt 40 und Schwenkabschnitt 42 und eine Schwenkachse 68 zwischen Kraftübertragungselement 62 und Schwenkabschnitt 42 zueinander parallel.

Wie in Figur 2 beispielhaft dargestellt, ist die Kraftübertragungseinrichtung 54, insbesondere das Kraftübertragungselement 62, vorzugsweise abschnittsweise durch die Spindel 22 geführt. Im Konkreten ist die Spindel 22 als Hohlspindel 70 ausgebildet, mit einem sich entlang der Z-Achse 27 von dem ersten Ende 26 zu dem zweiten Ende 56 erstreckenden Hohlraum 72.

Im Beispiel ist die Schubstange 64 in dem Hohlraum 72 angeordnet und entlang der Z-Achse 24 hin und her verlagerbar. Die Schubstange 64 ist in dem dargestellten Beispiel über die Kopplungseinrichtung 16 mit der Spindel 22 um die Z-Achse 24 drehfest gekoppelt. Die Schubstange 64 ist dann beispielhaft und bevorzugt über eine entsprechend Drehlagerung 74 mit dem Pneumatikzylinder 60 verbunden, sodass dieser von einer Drehbewegung der Schubstange um die Z-Achse 24 entkoppelt ist.

Wie in Figur 2 schematisch dargestellt, kann die Schubstange 64 vorzugsweise derart bemessen sein, dass diese den Hohlraum 72 der Hohlspindel 70 nicht vollständig ausfüllt, also ein Teilvolumen des Hohlraums 72 frei ist. Dieses verbleibende Teilvolumen des Hohlraums kann dann optional als Fluiddurchführung 76 verwendet werden, beispielsweise um Druckluft und/oder Unterdruck zu der Kopplungseinrichtung 16 und sodann zu dem Endeffektor 14 zu leiten. Bei nicht dargestellten Ausgestaltungen ist es auch denkbar, dass zu diesem Zweck in dem Hohlraum 72 ein Fluidschlauch vorgesehen ist.

Um den Endeffektor 14 mit Fluid, insbesondere Unterdruck und/oder Überdruck zu versorgen, kann es dann ferner vorteilhaft sein, wenn der Kopplungsabschnitt 48 eine Fluid-Schnittstelle (nicht dargestellt) zur Verbindung mit einer entsprechenden Gegen-Fluid-Schnittstelle des Endeffektors 14 aufweist. Im Konkreten kann der Kopplungsabschnitt 48 einen Unterdruckauslass und/oder Überdruckauslass (nicht dargestellt) aufweisen.

Wie vorstehend erwähnt, kann die Handhabungsvorrichtung 10 optional eine Erkennungseinrichtung (nicht dargestellt) umfassen, welche dazu ausgebildet ist, Position und Lage eines zu greifenden Gegenstands zu erkennen.

Die Handhabungsvorrichtung 10 umfasst insbesondere auch eine Steuereinrichtung (nicht dargestellt) zur Ansteuerung des Manipulators 12 und der Antriebseinrichtung 50. Die Steuereinrichtung kann insbesondere dazu eingerichtet sein, um in Abhängigkeit einer von der Erkennungseinrichtung erkannten Position und Lage eines zu greifenden Gegenstands den Manipulator 12 und/oder die Antriebseinrichtung 50 anzusteuern.

## Patentansprüche

1. Handhabungsvorrichtung (10), umfassend einen Manipulator (12), insbesondere Scara-Roboter (28), und eine Kopplungseinrichtung (16) mit einem Kopplungsabschnitt (48) zur Ankopplung eines Endeffektors (14) an den Manipulator (12),
wobei der Manipulator (12) einen Spindelantrieb (20) zum Antreiben einer translatorischen und/oder rotatorischen Bewegung der Kopplungseinrichtung (16) und eines optional daran angekoppelten Endeffektors (14) bezüglich einer Z-Achse (24) umfasst,
wobei der Spindelantrieb (20) eine Spindel (22) umfasst, welche entlang der Z-Achse (24) erstreckt ist,
wobei der Kopplungsabschnitt (48) bezüglich wenigstens eines Freiheitsgrads relativ zu der Spindel (22) verstellbar ist,
wobei eine Antriebseinrichtung (50) zum Antreiben einer Stellbewegung des Kopplungsabschnitts (48) bezüglich des wenigstens eines Freiheitsgrads vorgesehen ist,
wobei die Antriebseinrichtung (50) eine Antriebseinheit (52) und eine Kraftübertragungseinrichtung (54) zur Übertragung einer Antriebsbewegung der Antriebseinheit (52) auf den Kopplungsabschnitt (48) umfasst,
wobei die Kopplungseinrichtung (16) an einem ersten Ende (26) der Spindel (22) angeordnet ist und wobei die Antriebseinheit (52) an dem zweiten Ende (56) der Spindel (22) angeordnet ist.

2. Handhabungsvorrichtung (10) nach Anspruch 1, wobei die Spindel (22) als Hohlspindel (70) mit einem inneren Hohlraum (72) ausgebildet ist, wobei die Kraftübertragungseinrichtung (54) zumindest abschnittsweise durch den Hohlraum (72) geführt ist.

3. Handhabungsvorrichtung (10) nach Anspruch 2, wobei die Kraftübertragungseinrichtung (54) wenigstens ein Kraftübertragungselement (62) umfasst,
welches zumindest abschnittsweise in dem Hohlraum (72) der Hohlspindel (70) angeordnet ist,
insbesondere in dem Hohlraum (72) entlang der Z-Achse (24) verlagerbar oder um die Z-Achse (24) verdrehbar ist.

4. Handhabungsvorrichtung (10) nach Anspruch 3, wobei das wenigstens eine Kraftübertragungselement (62) eine Schubstange (64), einen Bowdenzug, eine Zahnstange, oder eine Spindel umfasst.

5. Handhabungsvorrichtung (10) nach einem der vorherigen Ansprüche, wobei der Kopplungsabschnitt (48) relativ zu der Spindel (22) um eine, insbesondere zu der Z-Achse (24) orthogonal verlaufende, Schwenkachse (46) schwenkbar ist, wobei die Antriebseinrichtung (50) dazu eingerichtet ist, eine Schwenkbewegung des Kopplungsabschnitts (48) um die Schwenkachse (46) anzutreiben.

6. Handhabungsvorrichtung (10) nach Anspruch 5, wobei die Kopplungseinrichtung (16) einen Verbindungsabschnitt (40) und einen Schwenkabschnitt (42) umfasst, wobei der Verbindungsabschnitt (40) mit der Spindel (22), insbesondere drehfest, verbunden ist,
wobei der Schwenkabschnitt (42) an dem Verbindungsabschnitt (40) um die Schwenkachse (46) schwenkbar gehaltert ist,
wobei der Kopplungsabschnitt (48) an dem Schwenkabschnitt (42) angeordnet ist.

7. Handhabungsvorrichtung (10) nach Anspruch 6, wobei das wenigstens eine Kraftübertragungselement (62) derart mit dem Schwenkabschnitt (42) mechanisch gekoppelt ist, dass eine Verschiebebewegung des wenigstens eine Kraftübertragungselements (62) entlang der Z-Achse (24) zu einer Schwenkbewegung des Schwenkabschnitts (42) um die Schwenkachse (46) führt.

8. Handhabungsvorrichtung (10) nach einem der vorherigen Ansprüche, wobei die Antriebseinheit (52) als Linearantrieb ausgebildet ist, insbesondere umfassend einen Pneumatikzylinder (60).

9. Handhabungsvorrichtung (10) nach einem der vorherigen Ansprüche, wobei die Kopplungseinrichtung (16) mit der Spindel (22) drehfest gekoppelt ist.

10. Handhabungsvorrichtung (10) nach einem der vorherigen Ansprüche, wobei die Antriebseinheit (52) von einer Drehbewegung der Spindel (22) und/oder des wenigstens einen Kraftübertragungselements (62) um die z-Achse (24) entkoppelt ist, insbesondere über entsprechend ausgebildete Drehlagerungen (58, 74).

11. Handhabungsvorrichtung (10) nach einem der vorherigen Ansprüche, wobei der Kopplungsabschnitt (48) einen Unterdruckauslass und/oder einen Überdruckauslass aufweist, insbesondere in Form einer Fluid-Schnittstelle zur Verbindung mit einer entsprechenden Gegen-Fluid-Schnittstelle eines Endeffektors (14).

12. Handhabungsvorrichtung (10) nach einem der Ansprüche 2 bis 11, außerdem umfassend wenigstens eine Fluiddurchführung (76) zur Führung von Fluid, insbesondere Unterdruck oder Überdruck, durch die Hohlspindel (70).

13. Handhabungsvorrichtung (10) nach einem der vorherigen Ansprüche, außerdem umfassend:
- eine Erkennungseinrichtung, welche dazu ausgebildet ist, Position und Lage eines zu greifenden Gegenstands zu erkennen; und
- eine Steuereinrichtung, welche dazu eingerichtet ist, in Abhängigkeit einer von der Erkennungseinrichtung erfassten Position und/oder Lage eines Gegenstands, den Manipulator (12) und/oder die Antriebseinrichtung (50) anzusteuern.

14. Handhabungsvorrichtung (10) nach einem der vorherigen Ansprüche, außerdem umfassend eine Sauggreifvorrichtung (18), welche über den Kopplungsabschnitt (16) mit dem Manipulator (12) verbunden ist.
